Europäisches Patentamt

European Patent Office

Office européen des brevets

Veröffentlichungsnummer: **0 287 910**
**A2**

# EUROPÄISCHE PATENTANMELDUNG

Anmeldenummer: 88105665.9

Anmeldetag: 09.04.88

Int. Cl.4 **B65D 81/34 , A47J 31/02 , A47J 31/08**

Priorität: 23.04.87 DE 3713609

Veröffentlichungstag der Anmeldung:
26.10.88 Patentblatt 88/43

Benannte Vertragsstaaten:
AT BE CH DE ES FR GB IT LI LU NL SE

Anmelder: Jacobs Suchard GmbH
Langemarckstrasse 8-20
D-2800 Bremen 1(DE)

Erfinder: Hampel, Hans-Joachim
Falkensteiner Strasse 1
D-6236 Eschborn(DE)
Erfinder: Wittekind, Jürgen
Cranachstrasse 20
D-6000 Frankfurt/Main 70(DE)

Vertreter: Bolte, Erich, Dipl.-Ing. et al
c/o Meissner, Bolte & Partner Patentanwälte
Hollerallee 73
D-2800 Bremen 1(DE)

## Filter, insbesondere Kaffeefilter, sowie Verfahren zur Herstellung eines solchen Filters.

Filter, insbesondere Kaffeefilter, mit einem auf den Rand (11) einer Tasse (14) oder dergleichen Zubereitungsgefäß aufsetzbarem, aufrechte oder annährend aufrechte Wandungen (25) aufweisenden Halterahmen (24) und einem innerhalb desselben befestigten Beutel (10) aus Filtermaterial, insbesondere Vliesmaterial, wobei der Halterahmen (24) an der dem Filterbeutel (10) zugewandten Seite hydrophob, d.h. wasserabweisend, ausgebildet ist, während der Filterbeutel (10) aus hydrophilem Filtermaterial besteht.

*Fig. 1*

EP 0 287 910 A2

# Filter, insbesondere Kaffeefilter, sowie Verfahren zur Herstellung eines solchen Filters

Die Erfindung betrifft ein Filter, insbesondere Kaffeefilter, gemäß dem Oberbegriff des Patentanspruches 1, sowie ein Verfahren zur Herstellung desselben.

Es ist bekannt, Tee, aber auch gemahlenen Kaffee in Aufgußbeutel zu füllen, wobei die Füllmenge für eine oder mehrere Tassen bestimmt ist. Kaffee-Aufgußbeutel ergeben beim Aufbrühen jedoch entweder ein unfriedigendes Getränk infolge zu geringen Extraktgehaltes, oder die Beutel müssen in der Tasse ausreichend lange intensiv bewegt werden, um den erforderlichen Extraktgehalt zu erreichen. Ferner nimmt der gemahlene Kaffee eine beträchtliche Wassermenge auf, so daß die Tasse nach dem Herausnehmen des Beutels nicht mehr voll ist.

Ausgehend von diesem Stand der Technik hat die Anmelderin bereits vorgeschlagen, ein Filter, insbesondere Kaffeefilter, zu schaffen, welches gekennzeichnet ist durch einen auf den Rand einer Tasse oder dergleichen Zubereitungsgefäß aufsetzbaren, aufrechte oder annähernd aufrechte Wandungen aufweisenden Halterahmen und einen innerhalb desselben befestigten Beutel aus Filtermaterial, insbesondere Filterpapier, wobei der Filterbeutel längs des gesamten inneren Umfangsrandes des Halterahmens an diesem befestigt ist, so daß der gesamte freie Querschnitt des Halterahmens durch den Filterbeutel ausgefüllt ist. Bevorzugt weist der Halterahmen einen dreieckförmigen Grundriß auf, wobei die Wandungen aus einem Papp-bzw. Kartonzuschnitt hergestellt sind. Bei der letztgenannten Ausführungsform ist der zu einem Dreieck auffaltbare Kartonzuschnitt vorzugsweise an wenigstens einer Seite nach innen faltbar unter Ausbildung einer M-Falte mit den jeweils anschließenden Seitenwandungen des den Dreieckrahmen bildenden Kartonzuschnitts.

Die Bedeutung des erwähnten Vorschlages liegt also in der Bereitstellung eines Tassenfilters, der sich durch hohe Funktionalität und Handhabungsfreundlichkeit auszeichnet.

Es hat sich nun gezeigt, daß bei der Benutzung eines derartigen Filters der Filterbeutel durch das Aufbrühwasser im oberen Bereich an den Halterahmen bzw. dessen aufrechte Wandungen gedrückt wird. Der durch das Vliesmaterial laufende Aufguß hat dabei das Bestreben, sowohl am Filterbeutel als auch am Halterahmen bzw. dessen Wandungen entlang abzulaufen. Ein Kontakt des Kaffee-Aufgusses mit dem Karton ist jedoch aus Akzeptanzgründen unerwünscht; außerdem besteht die Gefahr, daß ein Teil des Kaffees entlang des Halterahmens bzw. dessen Wandungen neben die Tasse oder dergleichen fließt.

Es ist daher Aufgabe der vorliegenden Erfindung, ein Filter der genannten Art zu schaffen, bei dem der Aufguß bzw. Kaffee nur am Filterbeutel entlang in die Tasse oder dergleichen abläuft.

Diese Aufgabe wird hinsichtlich des Filters durch die kennzeichnenden Merkmale des Patentanspruches 1 und hinsichtlich des Verfahrens zur Herstellung eines solchen Filters durch die kennzeichnenden Merkmale des Anspruches 11, 12 bzw. des Anspruches 13 gelöst.

Durch die erfindungsgemäßen Maßnahmen wird erreicht, daß der durch den Filterbeutel laufende Aufguß nur noch am Filterbeutel entlang in die Tasse oder dergleichen Gefäß abläuft, wobei zur Herstellung des Halterahmens herkömmliche Karton-bzw. Pappe-Qualitäten verwendet werden können.

Erfindungsgemäß muß also darauf geachtet werden, daß der Halterahmen an der dem Filterbeutel zugewandten Seite hydrophob, d.h. wasserabweisend, ausgebildet ist, während der Filterbeutel selbst aus einem hydrophilen Filtermaterial bestehen soll. Vom Filterbeutel wird also eine gute Wasserbenetzbarkeit verlangt, damit der Aufguß ausschließlich entlang des Filterbeutels in die Tasse abläuft. Übliche Filtervliese mit einer nichtorientierten Faseranordnung und einer vergleichsweise glatten Oberfläche sind hierfür ungeeignet; der Aufguß läuft trotz Verwendung eines hydrophobierten Halterahmens zum großen Teil entlang desselben ab und an der Tasse vorbei.

Erfindungsgemäß wird das angestrebte Ziel in bezug auf die Ausbildung des Filterbeutels in besonders einfacher Weise dadurch erreicht, daß das Filter-Vliesmaterial eine Faseranordnung aufweist, die zumindest teilweise, vorzugsweise jedoch überwiegend, in Fließrichtung des Aufgusses orientiert ist und/oder daß das Filter-Vliesmaterial eine tex tilähnlich strukturierte Oberfläche aufweist. Durch die letztgenannte Ausbildung und die dadurch bedingte Rauhig-keit der Oberflächenstruktur wird eine gewisse "Haftung" des Flüssigkeitsfilms auf dem Filterbeutel erreicht, die das Ablaufen entlang des Filterbeutels begünstigt.

Geeignet sind dabei Vliese mit einem Flächengewicht zwischen 16 und 17 g/qm, bevorzugt etwa 16,5 g/qm, und einer Dicke zwischen 0,05 und 0,07 mm, bevorzugt etwa 0,056 mm.

Besonders gute Ergebnisse, auch hinsichtlich der Verarbeitbarkeit, werden erhalten, wenn die Vliese aus einer Naturfasergrundschicht bestehen, auf die schmelzbare Kunststoff-Fasern als heißsiegelfähige Schicht aufgebracht sind.

Der Halterahmen bzw. dessen aufrechte Wandungen bestehen vorzugsweise aus Karton bzw.

Pappe, wobei die dem Filterbeutel zugewandte Seite derart hydrophobiert ist, daß bei Benetzung mit einem Tropfen Wasser sich ein Randwinkel von >100°, insbesondere >105°, ausbildet.

Um die Pappe derart zu hydrophobieren, wird die entsprechende Seite mit Mitteln behandelt, die mit den funktionellen Hydroxy-Gruppen der Zellulose chemisch reagieren, insbesondere mit einer Mischung aus dimerem Alkylketen, Wasser und Ammoniumzirkonkarbonat.

Zur Hydrophobierung der Pappe kann diese auch mit Mitteln behandelt werden, die in einem chemischen Prozeß auf der Faser zu einer wasserunlöslichen, wasserabweisenden Verbindung ausfällen, insbesondere mit einer wäßrigen Natriumstearat-und Aluminiumacetat-Lösung.

Ein besonders bevorzugtes Verfahren zur Hydrophobierung der Pappe bzw. des Zuschnitts aus Pappe zur Herstellung eines Halterahmens für ein Filter der beschriebenen Art ist dadurch gekennzeichnet, daß eine Mischung aus
68 ml 20 %ige wäßrige Dispersionen eines dimeren Alkylketens in Wasser,
910 ml Wasser,
22 ml Ammoniumzirkoncarbonat-Lösung 20 %ig, gelöst in Wasser,
in Mengen von etwa von etwa 20 bis 50 g/qm auf die zu hydrophobierende Seite der Pappe aufgebracht und bei etwa 120° C getrocknet wird.

Ein anderes Verfahren zur Hydrophobierung der Pappe ist dadurch gekennzeichnet, daß auf die Pappe etwa 30 g/qm einer 1 %igen wäßrigen Natriumstearat-Lösung aufgebracht werden, um dann auf die noch feuchte Pappe etwa 30 g/qm 1,5 %ige Aluminiumacetat-Lösung aufzubringen, und daß anschließend die so behandelte Pappe bei etwa 60° C getrocknet wird.

Durch das erstgenannten Verfahren erhält man einen Randwinkel von 120°; durch das zweitgenannten Verfahren einen Randwinkel von 124°.

Die Versuche wurden mit einer Pappe durchgeführt, welche ein Gewicht zwischen etwa 180 bis 240 g/qm, einen Leimungsgrad im Bereich zwischen etwa 1,5 bis 15 sowie eine Porosität zwischen etwa 50 und 250 Gurley/sec aufweist.

Es wurde des weiteren festgestellt, daß eine auch bei Konakt mit heißem Wasser ausreichende Hydrophobierung nur zu erreichen ist, wenn die verwendete Pappe gewissen Anforderungen entspricht. So darf diese aus ihrem Herstellungsprozeß auch in Spuren keine Stoffe mit Netzmittelcharakter enthalten, da diese der Hydrophobierung entgegenwirken würden.

Die genannten Hydrophobierungsmittel können auch bei der Herstellung der Pappe der Papiermasse zugesetzt werden.

Es muß auf jeden Fall sichergestellt sein, daß das Hydrophobierungsmittel so fest auf der Zellulosefaser der Faser verankert ist, daß es von dem heißen Aufguß nicht abgespült werden kann.

Um eine Hydrophobierung der Pappe für den Halterahmen zu vermeiden, wird eine Alternative entsprechend Anspruch 11 vorgeschlagen, die dadurch gekennzeichnet ist, daß im oberen Bereich zwischen Filterbeutel einerseits und Halterahmen bzw. dessen Wandungen andererseits eine hydrophob wirksame Schürze angeordnet ist. Diese besteht vorzugsweise aus einer dünnen Folie, z.B. Polyethylenfolie, die bei der Herstellung des Filters mit eingeformt und eingeschweißt wird. Durch die Anordnung dieser Schürze im oberen Bereich zwischen Filterbeutel und Halterahmen kann das eingegossene Wasser nach unten abfließen, ohne daß es an den Halterahmen bzw. dessen Pappwandungen gelangt.

Die Dicke der Pappwandungen des Halterahmens beträgt im übrigen zwischen etwa 0,2 bis 0,4, vorzugsweise etwa 0,3 mm.

Wie oben bereits dargelegt, ist es zur Erreichung eines hohen Hydrophobierungsgrads wichtig, daß die Ausgangspappe aus ihrer Herstellung keine Stoffe mit Netzmittelcharakter enthält, da diese der Hydrophobierung entgegenwirken würden. Eine diesbezügliche Kontrolle ist möglich über eine Randwinkelmessung; der Randwinkel der unbehandelten Pappe sollte mehr als 80° betragen.

Nachstehend werden zwei Ausführungsbeispiele eines erfindungsgemäß ausgebildeten bzw. hergestellten Tassenfilters anhand der beigefügten Zeichnung erläutert. Es zeigen:

Fig. 1 ein Tassenfilter, aufgesetzt auf eine Tasse, in perspektivischer Ansicht;

Fig. 2 eine abgewandelte Ausführungsform eines Tassenfilters, ebenfalls in perspektivischer Ansicht;

Fig. 3 den Tassenfilter nach Fig. 2 im Schnitt; und

Fig. 4a, b und c schematische Darstellungen zur Erläuterung des hier verwendeten Randwinkelbegriffs.

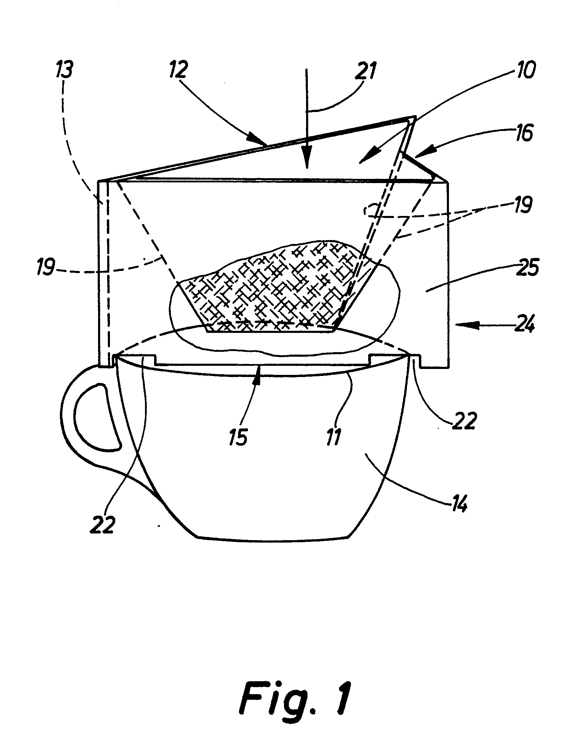

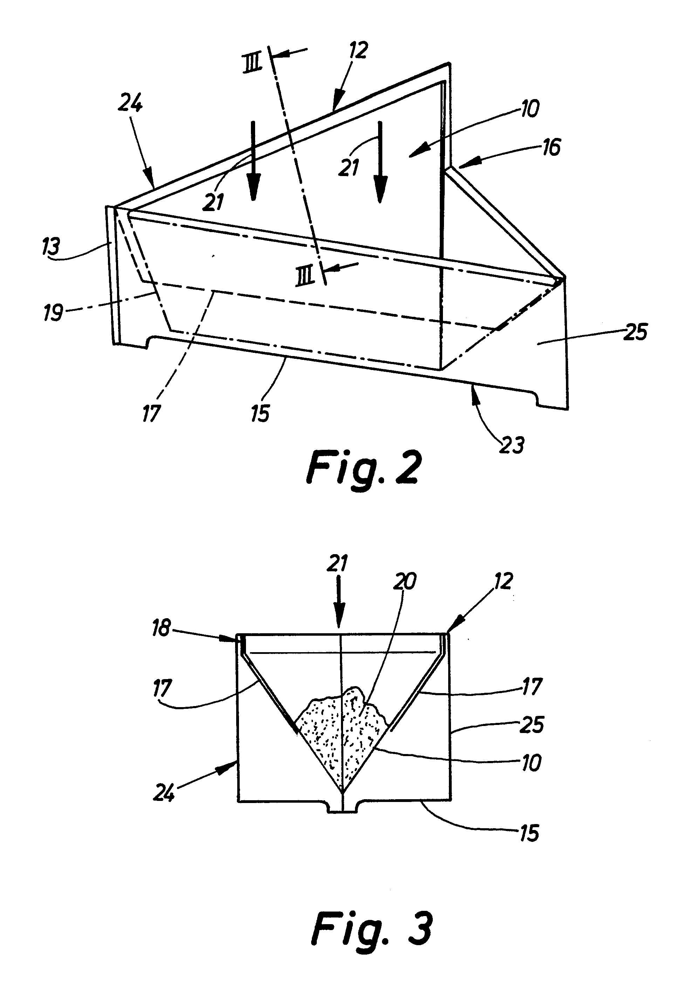

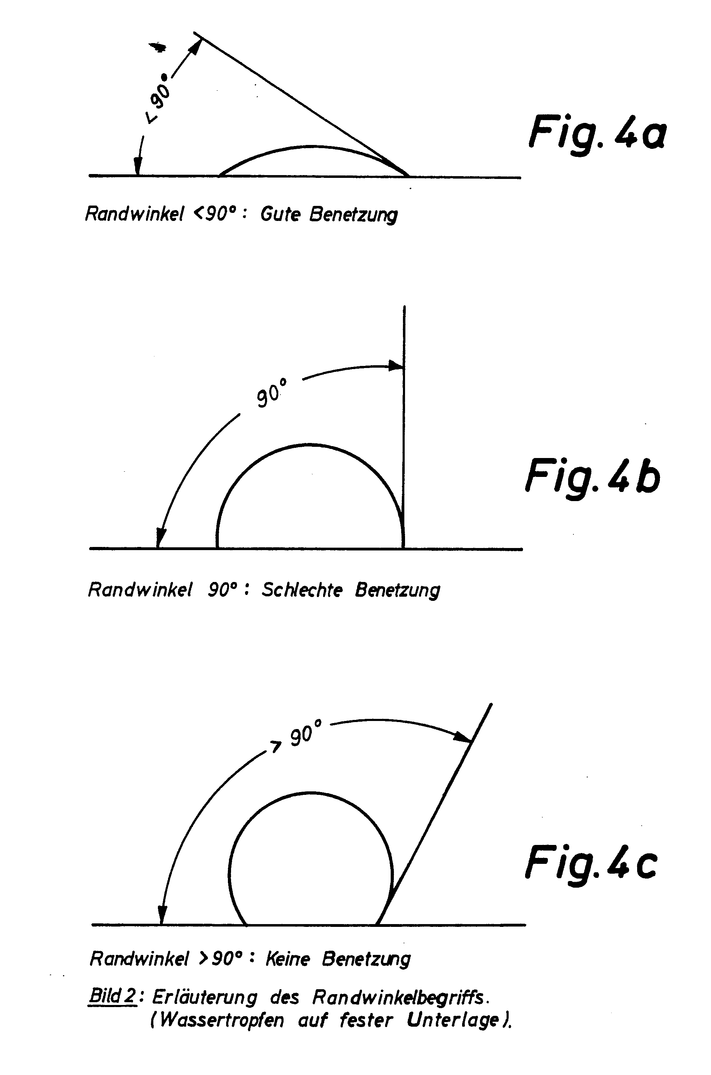

Zur Herstellung eines Tassenfilters der noch näher zu beschreibenden Art werden zwei im wesentlichen gleich große, nämlich gleich breite Bahnen aus Filtervlies und Karton aufeinander gefördert unter Ausbildung einer doppellagigen Materialbahn. Fortlaufend wird an einem Längsrand eine durchgehende Siegelnaht angebracht durch beispielsweise radförmige Siegelwerkzeuge. Dementsprechend müssen sowohl das Filtervlies als auch der Karton bzw. die Pappe aus siegelbarem Werkstoff bestehen oder im Bereich der Siegelnaht mit einem siegelbaren Material oberflächenbeschichtet sein. Sodann wird das fortlaufende, doppelbahnige bzw. doppellagige Gebilde in Zuschnitte aufgeteilt, die der erforderlichen Länge für ein Tassenfilter entsprechen. Die beiden Lagen jedes Zuschnitts werden nunmehr auseinander gefaltet, so daß ein Kartonzuschnitt und ein Filtervlieszuschnitt nebeneinander liegen, jedoch über die erwähnte Siegelnaht nach wie vor miteinander verbunden bleiben. In dieser Stellung werden die beiden Zuschnitte zunächst mittig gefaltet und dann wird durch ein fortlaufendes Faltwerkzeug eine M-Falte 16 entsprechend den Fig. 1 und 2 ausgebildet. Sodann erfolgt eine Siegelung an den freien Stirnrändern des Pappzuschnitts unter Ausbildung einer entsprechenden Randsiegelnaht 13 (siehe Fig. 1 und 2). Anschließend, jedoch vorzugsweise gleichzeitig, wird der von dem Pappzuschnitt abstehende Filtervlieszuschnitt, der ebenfalls an einer Seite durch die erwähnte M-Falte 16 gekennzeichnet ist, mit einer trapezförmigen Siegelnaht 19 versehen unter Ausbildung eines Filterbeutels 10. Die bei dieser Siegelung seitlich bzw. an den Ecken überstehenden Filtervlies-Zwickel werden abgetrennt bzw. abgeschnitten, so daß der Filterbeutel 10 eine insgesamt trapezförmige Gestalt erhält.

Anschließend wird der Filterbeutel 10, der sich jetzt umgestülpt außerhalb der Wandungen 25 eines dreieckförmigen Papp-Halterahmens 24 befindet, durch Umstülpen, z.B. mittels Druckluft, zwischen die Wandungen 35 des Rahmens 24 gebracht, so daß das Filter eine Gestalt entsprechend Fig. 1 oder 2 annimmt. Der Pappzuschnitt bildet in der beschriebenen Ausführungsform einen auffaltbaren Dreieckrahmen für den Filterbeutel 10, der längs des gesamten oberen Randes 12 mit dem Pappzuschnitt verbunden, nämlich versiegelt ist.

Durch die M-Faltung 16 ist das in der beschriebenen Weise hergestellte Tassenfilter flach zusammenfaltbar und unter Auffaltung an unterschiedliche Randdurchmesser von Kaffee-oder dergleichen Tassen anpaßbar, derart, daß es nach dem Aufsetzen auf den Tassenrand 11 von diesem nicht ohne weiteres abrutscht, d.h. auf dem Tassenrand 11 sicher steht. In Fig. 1 ist ein Tassenfilter, welches wie beschrieben hergestellt ist, auf den Rand 11 einer Tasse 14 aufgesetzt.

Vorzugsweise ist der Filterbeutel 10 herstellerseitig mit einer vorgegebenen Menge Kaffee 20 (siehe Fig. 3) gefüllt. Nach der Füllung wird das Tassenfilter flach zusammengefaltet, längs des oberen Randes 12 verschlossen, z.B. mittels eines Klebestreifens oder einer Schließlasche, und anschließend in einer äußeren Umhüllung luft-und aromadicht untergebracht, vorzugsweise vakuumverpackt. Beim Gebrauch wird diese äußere Umhüllung aufgerissen und entfernt, der vorerwähnte Klebestreifen abgezogen, das Tassenfilter aufgefaltet und auf eine Tasse bzw. den Tassenrand 11 einer Tasse 14 aufgesetzt. Anschließend kann mit heißem Wasser die tassengerechte Menge Kaffee aufgebrüht werden. Die Aufgußrichtung ist in den Fig.

1 bis 3 mit dem Pfeil 21 gekennzeichnet.

Um die Standsicherheit des beschriebenen Tassenfilters bzw. des zu einem Dreieck auffaltbaren Pappzuschnitts auf dem Tassenrand 11 einer Tasse 14 zu erhöhen, kann der aus dem Zuschnitt hergestellte Papprahmen an seinem der Tasse 14 zugeordneten Stützrand 15 ausgespart sein, derart, daß er nicht ohne weiteres seitlich vom Tassenrand abrutschen kann.

In Fig. 1 sind derartige Aussparungen mit der Bezugsziffer 22 gekennzeichnet. Bei der Ausführungsform nach den Fi. 2 und 3 sind die endseitig angeordneten Aussparungen 22 entsprechend Fig. 1 zu einer einzigen Aussparung 23 zusammengefaßt, die zugleich den Stützrand 15 der jeweiligen Wandungen 25 des Halterahmens 24 definieren.

Der Filterbeutel 10 besteht aus einem Vliesmaterial, wie es weiter oben näher beschrieben ist.

Die innenliegenden Seiten der aus Pappe bestehenden Wandungen 25 sind bei der Ausführungsform nach Fig. 1 hydrophobiert. Es wird diesbezüglich ebenfalls auf die obigen Ausführungen verwiesen.

Die Ausführungsform nach den Fig. 2 und 3 unterscheidet sich von derjenigen nach Fig. 1 dadurch, daß die Pappwandungen 25 des Halterahmens 24 nicht hydrophobiert sein müssen. Stattdessen ist eine streifenartige Schürze aus einer dünnen Folie, z.B. Polyethylenfolie, zwischen Filterbeutel 10 und den aufrechten Wandungen 25 des Halterahmens 24 angeordnet. Im Rahmen der oben beschriebenen Herstellung eines Tassenfilters kann die Schürze 17 zwischen dem Pappzuschnitt und dem zugeordneten Filtermaterial-Zuschnitt eingeformt und eingeschweißt werden. Die Schürze 17 liegt in einem oberen Bereich zwischen Filterbeutel 10 und Halterahmen 24 bzw. dessen aufrechten Seitenwandungen 25, so daß das eingegossene Wasser (Pfeil 21) nach unten abfließen kann und nicht an die normalerweise hydrophilen Pappwandungen 25 gelangt. Die Siegellinie der Schürze 17 zwischen Filterbeutel 10 einerseits und den aufrechten Wandungen 25 des Halterahmens 24 andererseits ist in Fig. 3 mit der Bezugsziffer 18 gekennzeichnet.

Die Schürze 17 kann ebenfalls aus Pappe oder Papier bestehen, welches an der dem Filterbeutel 10 zugewandten Seite hydrophob ausgebildet ist, zum Beispiel nach einem der eingangs beschriebenen Verfahren.

Anhand der Fig. 4a, 4b und 4c soll der hier verwendete Randwinkelbegriff kurz erläutert werden. Dementsprechend ist der Randwinkel ein Maß für die Benetzbarkeit der Oberfläche. Gemäß den Fig. 4a bis 4c ist der Randwinkel der Winkel zwischen der benetzten Oberfläche und dem Wassertropfen unter Einschluß desselben, wobei Fig. 4a einen Randwinkel von < 90°, Fig 4b einen Randwinkel von 90° und Fig. 4c einen Randwinkel von >90° zeigen. Dementsprechend bedeuten ein Randwinkel von < 90° eine gute Benetzung, ein Randwinkel von 90° eine schlechte Benetzung und ein Randwinkel von >90° praktisch keine Benetzung einer festen Unterlage.

Sämtliche in den Anmeldungsunterlagen offenbarten Merkmale werden als erfindungswesentlich beansprucht, soweit sie einzeln oder in Kombination gegenüber dem Stand der Technik neu sind.

### Ansprüche

1. Filter, insbesondere Kaffeefilter, mit einem auf den Rand einer Tasse oder dergleichen Zubereitungsgefäß aufsetzbaren, aufrechte oder annährend aufrechte Wandungen aufweisenden Halterahmen und einem innerhalb desselben befestigten Beutel aus Filtermaterial, insbesondere Vliesmaterial,

**dadurch gekennzeichnet,** daß der Halterahmen (24) an der dem Filterbeutel (10) zugewandten Seite hydrophob, d.h. wasserabweisend, ausgebildet ist, während der Filterbeutel (10) aus einem hydrophilen Filtermaterial besteht.

2. Filter nach Anspruch 1, dadurch gekennzeichnet, daß das Filter-Vliesmaterial eine Faseranordnung aufweist, die zumindest teilweise, vorzugsweise überwiegend, in Fließrichtung des Aufgusses orientiert ist.

3. Filter nach Anspruch 1 oder 2, dadurch gekennzeichnet, daß das Filter-Vliesmaterial eine textilähnlich strukturierte Oberfläche aufweist.

4. Filter nach einem der Ansprüche 1 bis 3, dadurch gekennzeichnet, daß das Filter-Vliesmaterial ein Flächengewicht zwischen etwa 15 und 19 g/qm, insbesondere 16 und 17 g/qm, vorzugsweise 16,5 g/qm, und eine Dicke zwischen etwa 0,03 und 0,09 mm, insbesondere 0,05 und 0,07 mm, vorzugsweise 0,056 mm, aufweist.

5. Filter nach einem oder mehreren der Ansprüche 1 bis 4, dadurch gekennzeichnet, daß das Filter-Vliesmaterial aus einer Naturfasergrundschicht besteht, auf die schmelzbare Kunststoff-Fasern als heißsiegelfähige Schicht aufgebracht sind.

6. Filter nach einem oder mehreren der Ansprüche 1 bis 5, dadurch gekennzeichnet, daß der Halterahmen (24) bzw. dessen aufrechte Wandungen (25) aus Karton bzw. Pappe besteht bzw. bestehen, deren dem Filterbeutel (10) zugewandte Seite derart hydrophobiert ist, daß bei Benetzung mit einem Tropfen Wasser sich ein Randwinkel von >100°, insbesondere >105°, ausbildet.

7. Filter nach Anspruch 6, dadurch gekennzeichnet, daß zur Hydrophobierung der Pappe diese mit Mitteln behandelt ist, die mit den funktionellen Hydroxy-Gruppen der Zellulose chemisch reagieren, insbesondere mit einer Mischung aus dimerem Alkylketen, Wasser und Ammoniumzirkoncarbonat.

8. Filter nach Anspruch 6, dadurch gekennzeichnet, daß zur Hydrophobierung der Pappe diese mit Mitteln behandelt ist, die in einem chemischen Prozeß auf der Faser zu einer wasserunlöslichen, wasserabweisenden Verbindung ausfällen, insbesondere mit einer wäßrigen Natriumstearat- und Aluminiumacetat-Lösung.

9. Filter nach einem der Ansprüche 1 bis 8, dadurch gekennzeichnet, daß die Pappe für den Halterahmen (24) frei ist von Stoffen mit Netzmittelcharakter.

10. Filter nach einem der Ansprüche 1 bis 9, dadurch gekennzeichnet, daß die Pappe für den Halterahmen (24) ein Gewicht von etwa 180 bis 240 g/qm, einem Leimungsgrad im Bereich von etwa 1,5 bis 15 sowie eine Porosität zwischen etwa 50 und 250 Gurley/sec. aufweist.

11. Filter, insbesondere nach einem der Ansprüche 1 bis 10, dadurch gekennzeichnet, daß im oberen Bereich zwischen Filterbeutel (10) einerseits und Halterahmen (24) bzw. dessen Wandungen andererseits eine hydrophob wirksame Schürze (17), insbesondere aus Polyethylen oder dergleichen, angeordnet, vorzugsweise eingeschweißt, ist.

12. Verfahren zur Hydrophobierung von Pappe, insbesondere eines Zuschnitts aus Pappe zur Herstellung eines Halterahmens für einen Filter nach einem der vorangehenden Ansprüche, insbesondere Anspruch 7, dadurch gekennzeichnet, daß eine Mischung aus
68 ml 20 %ige wäßrige Dispersion eines dimeren Alkylketens in Wasser,
910 ml Wasser,
22 ml Ammoniumzirkoncarbonat-Lösung 20 %ig, gelöst in Wasser;
in Mengen von etwa 20 bis 50 g/qm auf die zu hydrophobierende Seite der Pappe aufgebracht und bei etwa 125° C getrocknet wird.

13. Verfahren zur Hydrophobierung einer Pappe, insbesondere eines Zuschnitts aus Pappe zur Herstellung eines Halterahmens für einen Filter nach einem der vorangehenden Ansprüche 1 bis 10, insbesondere Anspruch 8, dadurch gekennzeichnet, daß auf die Pappe etwa 30 g/qm einer 1 %igen wäßrigen Natriumstearat-Lösung aufgebracht werden, um dann auf die noch feuchte Pappe etwa 30 g/qm 1,5 %ige Aluminiumacetatlösung aufzubringen, und daß anschließend die so behandelte Pappe bei etwa 60° C getrocknet wird.

*Fig. 1*

**Fig. 2**

**Fig. 3**

*Fig. 4a*

*Randwinkel <90° : Gute Benetzung*

*Fig. 4b*

*Randwinkel 90° : Schlechte Benetzung*

*Fig. 4c*

*Randwinkel >90° : Keine Benetzung*

*Bild 2: Erläuterung des Randwinkelbegriffs.
(Wassertropfen auf fester Unterlage).*